# EUROPÄISCHE PATENTSCHRIFT

(11) **EP 1 657 795 B1**
(45) Veröffentlichungstag und Bekanntmachung des Hinweises auf die Patenterteilung: **19.12.2007**
(21) Anmeldenummer: 05024356.7
(22) Anmeldetag: 09.11.2005
(51) Int. Cl.: H02G 15/02, H01R 13/53, H01R 13/58

(54) **Kabelsteckverbinder einer Steckverbindungseinrichtung für die Mittel- und Hochspannungstechnik**
Cable plug of a plug-type connection device for medium-voltage and high-voltage technics
Connecteur enfichable de câble d'un dispositif de connexion enfichable pour la technologie de la moyenne et de l'haute tension

(30) Priorität: 12.11.2004 DE 102004054639
(43) Veröffentlichungstag der Anmeldung: 17.05.2006
(60) Teilanmeldung: 07020871.5
(73) Patentinhaber: Pfisterer Kontaktsysteme GmbH & Co. KG, 73650 Winterbach (DE)
(72) Erfinder: Leonhardt, Gottfried, 68723 Oftersheim (DE)
(74) Vertreter: Crazzolara, Helmut

(56) Entgegenhaltungen:
- DE-A1- 3 021 845
- DE-A1- 4 239 648
- DE-C1- 4 403 571
- US-A- 4 758 171
- US-A- 6 017 243

## Beschreibung

Die Erfindung betrifft einen Kabelsteckverbinder einer Steckverbindungseinrichtung für die Mittel- und Hochspannungstechnik.

Gattungsgemäße Kabelsteckverbinder sind beispielsweise aus der EP 0 459 250 B1 bekannt. Bei den bekannten Kabelsteckverbindern wird als Verbindungsmittel für die elektrische Verbindung zwischen dem Leiter des Kabels und einem Kontaktelement des Gegenstücks des Kabelsteckverbinders eine in Längsrichtung geschlitzte Konushülse auf den abisolierten Leiter aufgesteckt und mittels eines Kontaktkörpers angepresst, der die Kontaktstelle für die elektrische Verbindung des Verbindungsmittels und mithin des Leiters und dem Kontaktelement des Gegenstücks aufweist.

Aus der DE 30 21 845 A1 ist ein Kabelstecker bekannt, bei dem am Ort der elektrischen Verbindung des Kabels mit einem Basiselement des Verbindungsmittels das Isolierelement in dichter Anlage an dem Basiselement ist, so dass kein Hohlraum entsteht.

Die DE 42 39 648 A1 zeigt eine Steckverbindungseinrichtung mit einem in eine Steckbuchse einsteckbaren Kabelstecker für elektrische Kabel eines Hochspannungsenergieversorgungsnetzes, bei der der Kabelstecker einen auf dem abisolierten Endabschnitt des Kabels festlegbaren Kontaktkörper und einen auf die Kabelisolation aufschiebbaren Dichtungskörper aus Silikonkautschuk aufweist. Hierbei bildet der sich gegen den Kontaktkörper hin verjüngende Dichtungskörper einen Außenkonus, welcher elektrisch und mechanisch dicht an den einen korrespondierenden Innenkonus bildenden Abschnitt der Innenwand einer Steckbuchse anpressbar ist.

Aus der DE 44 03 571 C1 ist eine Verbindungsmuffe für kunststoffisolierte Hochspannungsenergieversorgungskabel bekannt mit einer einen durchgehenden Längskanal zur Aufnahme der beiden abisolierten Kabelenden aufweisenden Verbindungsklemme sowie zwei je einen durchgehenden Längskanal aufweisenden Isolierkörper aus einem elastomeren Material, die auf den vom Kabelmantel befreiten, aber noch mit der Kunststoffisolation versehenen Endabschnitt je eines der zu verbindenden Kabel aufschiebbar sind und im aufgeschobenen Zustand an der Kunststoffisolation anliegen. Die Verbindungsklemme im Abstand umgebende Abschnitte der Innenmantelflächen von Außenteilen der Isolierkörper sind mit einer elektrisch leitenden Schicht versehen.

Durch die US-A-4 758 171 ist eine Kabelverbindung bekannt mit einem elektrischen Kabel und einem elektrisch isolierenden Steckverbinder zur Verbindung des Kabels mit einem elektrischen Gerät. Hierbei weist der Steckverbinder ein isolierendes Gehäuse auf mit einer ersten durch eine dünne flexible Wand begrenzten Durchführung für das Kabel, welches in Art einer Schiebepassung in der Durchführung aufgenommen wird, und mit einer zweite Durchführung für die Verbindung mit dem elektrischen Gerät sowie elektrisch leitende Mittel, die einen leitfähigen Pfad zwischen dem Leiter des Kabels und dem elektrischen Gerät herstellen.

Durch die US-A-6 017 243 ist eine zugentlastete wasserdichte Kabelklemme, insbesondere für einen elektrischen Stecker, Sockel oder die Verbindung zu einem elektrischen Gerät bekannt. Hierbei weist die Kabelklemme einen Körper und eine Stopfbuchse in jeweils einer Größe und eine Vielzahl von verformbaren Durchführungen und Spannzangenvorrichtungen mit unterschiedlichen Abmessungen auf, um dergestalt die Anwendbarkeit der Kabelklemme bei einem großen Bereich von Durchmessern von Kabeln zu gewährleisten.

Die Leiter der Kabel weisen unterschiedliche Querschnittsflächen und damit unterschiedliche Durchmesser auf. Für die unterschiedlichen Durchmesser der Leiter müssen jeweils passende Verbindungsmittel bereitgestellt werden; insbesondere entsprechende Kontakthülsen und Kontaktkörper, die an den Durchmesser des Leiters angepasst sind. Entsprechendes gilt auch für die geometrische Ausgestaltung des Gegenstücks der Steckverbindungseinrichtung, damit eine dauerhaft zuverlässige elektrische Verbindung mit geringem Übergangswiderstand bereitgestellt werden kann. Dies führt in der Praxis zu einer großen Typenvielfalt und zu den damit verbundenen Kosten für die Vorhaltung der unterschiedlichen Größen. Außerdem erfordern die unterschiedlichen Größen unterschiedlich hohe Montagekräfte, wodurch die Montage insbesondere im Hinblick auf die dauerhaft zuverlässige Kontaktgabe erschwert ist. Diese Problematik wird noch dadurch verstärkt, dass durch Unternehmensfusionen auf dem Gebiet der die gattungsgemäßen Kabelsteckverbinder einsetzenden Energieversorgungsunternehmen die Anzahl der unterschiedlichen Kabelquerschnitte weiter erhöht ist.

Der Erfindung liegt daher die Aufgabe zugrunde, einen Kabelsteckverbinder bereitzustellen, der die Nachteile des Standes der Technik überwindet. Insbesondere soll ein Kabelsteckverbinder bereitgestellt werden, der für einen großen Bereich unterschiedlicher Querschnitte und Durchmesser von Leitern eingesetzt werden kann, und bei einfacher Montage eine dauerhaft zuverlässige Kontaktgabe gewährleistet. Der Kabelsteckverbinder und dessen Bestandteile sollen kostengünstig herstellbar sein. Darüber hinaus soll zuverlässig und auf einfache Weise ein Detektieren des Potentials des Leiters möglich sein.

Diese Aufgabe ist durch den im Anspruch 1 bestimmten Kabelsteckverbinder gelöst. Besondere Ausführungsarten der Erfindung sind in den Unteransprüchen bestimmt.

Der erfindungsgemäße Kabelsteckverbinder ist insbesondere für ein Innenkonus-Stecksystem ausgebildet. Vorzugsweise nimmt das Isolierelement im zweiten Abschnitt mindestens einen Teil des Verbindungsmittel in sich auf. Der die konische Fläche ausbildende zweite Abschnitt des Isolierelements ist als Hohlkörper ausgebildet und weist auf seiner dem Verbindungsmittel zugewandten Innenfläche eine elektrisch leitfähige Beschichtung auf. Dadurch bildet der Isolierkörper eine Art Faradaykäfig für das Verbindungsmittel, der vorzugsweise stirnseitig durch ein mit dem Verbindungsmittel verbindbares Kontaktelement verschlossen ist.

Das Isolierelement ist dabei aus einem weichelastisch verformbaren Werkstoff hergestellt und kann daher an den entsprechenden Anlageflächen des Gegenstücks der Steckverbindungseinrichtung in eine elektrisch dichte Anlage gebracht werden. Unter "elektrisch dicht" ist dabei zu verstehen, dass sich an den Anlageflächen keine Hohlräume oder Spalte bilden, in denen es zu Überschlägen oder Entladungserscheinungen kommen könnte.

Vorzugsweise ist das Isolierelement langgestreckt hülsenartig und insbesondere rotationssymmetrisch ausgebildet. In einem ersten Abschnitt nimmt das Isolierelement dabei das anzuschließende Kabel auf und wird dabei derart aufgeweitet, dass eine dichte Anlage an der Primärisolation und an dem Kabelschirm gewährleistet ist. Zur Überbrückung größerer Variationen im Kabeldurchmesser kann auch ein hülsenartiges Adapterelement zwischen dem Isolierelement und dem Kabel angeordnet sein, wobei das Adapterelement ebenfalls aus einem weichelastisch verformbaren Kunststoff besteht.

In einem zweiten Abschnitt, der gegenüber dem ersten Abschnitt vorzugsweise einen größeren Innendurchmesser aufweist, nimmt das Isolierelement das Verbindungsmittel auf, insbesondere jenen Teil des Basiselements des Verbindungsmittels, mit dem das Basiselement an dem Leiter des Kabels festgelegt ist. Auf seiner dem Verbindungsmittel zugewandten Innenfläche weist das Isolierelement eine elektrisch leitfähige Beschichtung auf, die vorzugsweise bis zu einem stirnseitigen Ende des Isolierelements reicht und dort durch Anlage des Isolierelements an dem Kontaktelement mit dem Potential des Leiters verbindbar ist. Diese elektrisch leitfähige Beschichtung ist an einem dem ersten Abschnitt des Isolierelements zugewandten Ende des zweiten Abschnitts mit einer in das Isolierelement integrierten Absteuerelektrode elektrisch verbunden, die durch ihre geometrische Form, insbesondere durch eine verrundete Kontur, das Auftreten von Feldstärkespitzen vermeidet.

Auf seiner Außenfläche weist das Isolierelement mindestens eine weitere leitfähige Schicht auf. Insbesondere weist das Isolierelement in seinem das Kabel aufnehmenden ersten Abschnitt auf seiner Außenfläche eine leitfähige Beschichtung auf, die bei der Montage des Kabelsteckverbinders in elektrische Verbindung mit einem Flanschelement bringbar ist und dadurch mit einem vorgebbaren Potential verbindbar ist, insbesondere mit Erdpotential. In diesem ersten Abschnitt ist außerdem eine Feldsteuerelektrode in das Isolierelement eingearbeitet, insbesondere als Einlegeteil in das Isolierelement integriert, die mit einer Leitschicht auf der Primärisolation des Kabels elektrisch verbindbar ist und durch eine verrundete Kontur das Auftreten von Feldstärkespitzen vermeidet.

Im Bereich des zweiten Abschnitts, in dem das Isolierelement das Verbindungsmittel aufnimmt, insbesondere ein Basiselement des Verbindungsmittels aufnimmt, weist die Außenfläche des Isolierelements eine weitere elektrische Beschichtung auf, durch die mittels kapazitiver Kopplung ein Abgriff des elektrischen Potentials des Leiters möglich ist. Der Übergangsbereich zwischen dem ersten und dem zweiten Abschnitt des Isolierelements ist vorzugsweise flanschartig verbreitert ausgebildet. Durch den Flansch kann eine Andruckkraft auf das Isolierelement im montierten Zustand ausgeübt werden. Vorzugsweise im Bereich der Mantelfläche dieses Flansches ist in das Isolierelement eine insbesondere umlaufende Ringnut eingebracht, in die ein Draht für die Kontaktierung der weiteren Beschichtung für den Potentialabgriff eingelegt werden kann. Zwischen der Position, in welcher bei montiertem Kabelstecker eine Axialkraft in das Isolierelement eingebracht wird, und der von dem Isolierelement ausgebildeten konischen Fläche bildet das Isolierelement vorzugsweise einstückig einen Axialfederabschnitt aus, der durch die beispielsweise beim Zusammenstecken eingeleiteten Axialkräfte kraftspeichernd verformbar ist und dadurch dauerhaft eine Axialkraft auf den die konische Fläche bildenden ersten Abschnitt des Isolierelements ausübt, und dadurch die konische Fläche in elektrisch dichter Anlage an der zugeordneten Fläche des Gegenstücks der Steckverbindungseinrichtung hält. Das Isolierteil ist dabei im zusammengesteckten Zustand durch die eigene elastische Verformung mit der konischen Dichtfläche in elektrisch dichter Anlage an der zugeordneten Fläche des Gegenstücks gehalten. Die konische Dichtfläche zum Gegenstück und die weitere Dichtfläche zur Primärisolation sind in Längsrichtung des Isolierelements hintereinander angeordnet. Dadurch ist es möglich, im Bereich der konischen Dichtfläche einen Hohlraum zu schaffen, um ein Schraubverbindungselement als Verbindungsmittel unterzubringen, wobei der Hohlraum durch eine leitfähige Beschichtung des Isolierelements feldfrei bleibt, und daher unterschiedliche Größen des Verbindungselements und mithin auch unterschiedlich große Leiterquerschnitte eingesetzt werden können.

Der Anpressdruck auf die Dichtfuge zwischen der Primärisolation des Kabels und der weiteren Dichtfläche des Isolierelements wurde nach dem Stand der Technik auch durch den konischen Formschluss zwischen dem Isolierelement, insbesondere dessen konischer Fläche, und dem Gegenstück erhöht. Durch die erfindungsgemäße Hintereinanderanordnung der inneren und äußeren Dichtfläche des Isolierelements in Längsrichtung ist es möglich, diese beiden entstehenden Dichtfugen mechanisch zu entkoppeln. Dadurch können unterschiedliche Kabeldurchmesser eingesetzt werden, ohne dadurch die Qualität der Dichtfuge zwischen dem Isolierelement und dem Gegenstück negativ zu beeinträchtigen. Die Dichtfuge zwischen dem Isolierelement und der Primärisolation des Kabels wird erfindungsgemäß durch die radiale Vorspannung des Isolierelements in dessen ersten Abschnitt gewährleistet. Dadurch ist es auch möglich, dass das insbesondere einem mechanischen Schutz dienende Flanschelement eine so große Öffnung aufweisen kann, dass Kabel mit unterschiedlichem Außendurchmesser verwendet werden können. Ein sich zwischen dem Isolierelement und dem Flanschelement in der Regel ergebender Ringspalt wird durch eine entsprechende Beschichtung auf der Außenseite des Isolierelements feldfrei gehalten.

Das Verbindungsmittel kann einteilig oder mehrteilig sein. Durch die Trennung des Orts der Festlegung des Leiters an dem Verbindungsmittel von dem Ort der Kontaktstelle des Verbindungsmittels zu dem Gegenstück der Steckverbindungseinrichtung besteht die Möglichkeit, das Verbindungsmittel am Ort der Festlegung des Leiters so auszugestalten, dass unterschiedliche Leiterquerschnitte mit ein und demselben Verbindungsmittel verbunden werden können und gleichzeitig die Abmessungen an der Kontaktstelle unverändert bleiben. Dadurch ist die Typen- und insbesondere Größenvarianz der Elemente der Steckverbindungseinrichtung deutlich herabgesetzt. So können beispielsweise Kabel in einem Querschnittsbereich von unter 100 mm² bis einige 100 mm² abgedeckt werden, in einem Ausführungsbeispiel von 95 bis 240 mm² und mit einem Zusatzadapter sogar von 35 bis 240 mm².

Die Festlegung des Leiters an dem Verbindungsmittel kann grundsätzlich mit allen hierzu aus dem Stand der Technik bekannten Möglichkeiten erfolgen, einschließlich auch einer Pressverbindung. Besonders bevorzugt ist allerdings eine Schraubverbindung, da hierdurch auf einfache Weise und ohne Spezialwerkzeuge unterschiedliche Leiterquerschnitte mit dem Verbindungsmittel verbunden werden können. Soweit zweckdienlich, kann der insgesamt abzudeckende Größenbereich der Leiterquerschnitte auch von zwei oder drei Verbindungsmitteln bedient werden, womit immer noch eine deutliche Herabsetzung der Typenvarianz gewährleistet ist. Vorzugsweise wird der Leiter an dem Verbindungsmittel sowohl mechanisch festgelegt als auch elektrisch verbunden.

Der erfindungsgemäße Kabelsteckverbinder ist insbesondere für Spannungen von 10 kV und höher einsetzbar. Die konische Fläche ist am Steckerteil der Steckverbindungseinrichtung als Außenkonus ausgebildet und dementsprechend für Buchsen mit einem Innenkonus ausgelegt, vorzugsweise in einer Bauform nach der Europäischen Norm EN 50180 und EN 50181.

Das Verbindungsmittel kann grundsätzlich auch einstückig ausgebildet sein, insbesondere einschließlich einer einstückigen Ausbildung der Kontaktstelle. Vorzugsweise ist das Verbindungsmittel jedoch mehrteilig und weist ein elektrisch leitfähiges Basiselement auf mit einem ersten Abschnitt, in dessen Bereich die Festlegung des Leiters erfolgt, und mit einem in Längsrichtung des Basiselements, die mit der Richtung des Zusammensteckens übereinstimmen kann, beabstandeten zweiten Abschnitt, in dessen Bereich die Kontaktstelle des Verbindungsmittels angeordnet ist. Die Außenabmessungen des ersten und des zweiten Bereichs können dabei unterschiedlich sein, insbesondere können die Außenabmessungen des zweiten Abschnitts im Bereich der Kontaktstelle geringer sein als die Außenabmessungen des ersten Abschnitts im Bereich der Festlegung des Leiters. Der Übergang zwischen den beiden Abschnitten kann gestuft und vorzugsweise mindestens abschnittsweise konisch erfolgen.

Vorzugsweise ist das Basiselement im Wesentlichen rotationssymmetrisch und weist in einem ersten Abschnitt eine in Längsrichtung verlaufende zentrische Bohrung auf, in welche der Leiter des Kabels einführbar ist. Quer zu dieser Bohrung kann das Basiselement Gewindebohrungen für die Aufnahme von Verbindungsschrauben aufweisen, mittels denen das Basiselement mit dem Leiter des Kabels verbindbar ist. Als Verbindungsschrauben können insbesondere Abreißschrauben verwendet werden, die bei der Festlegung des Leiters an einer Stelle derart abreißen, dass sich kein oder jedenfalls kein wesentlicher Überstand des eingeschraubten Schraubenteils über das Basiselement ergibt.

Grundsätzlich kann das Basiselement die Kontaktstelle einstückig ausbilden. Für viele Anwendungsfälle wird es allerdings vorteilhaft sein, dass ein die Kontaktstelle aufweisendes Kontaktelement an dem Basiselement lösbar festlegbar ist. Dadurch kann insbesondere die Montage des Kabelsteckverbinders an dem Kabel vereinfacht werden. Darüber hinaus können dadurch unterschiedliche Kontaktelemente für unterschiedliche Ströme eingesetzt werden. Vorzugsweise ist auf dem Kontaktelement selbst nochmals ein Kontaktorgan angeordnet, welches die Kontaktstelle aufweist, insbesondere ein Kontaktorgan, das eine Vielzahl von Linienkontakten aufweist.

Für die Festlegung des Kontaktelements weist das Basiselement vorzugsweise auf einem der Festlegung des Leiters des Kabels gegenüberliegenden zweiten Abschnitt einen auf seiner Außenseite zylindrischen, insbesondere kreiszylindrischen, oder konischen Zapfen auf, mit einer zentrischen Gewindebohrung zum Eindrehen einer Verbindungsschraube. Das Kontaktelement kann hutförmig ausgebildet sein und auf den Zapfen des Basiselements aufsteckbar sein.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch einen erfindungsgemäßen Kabelsteckverbinder im unmontierten Zustand,
- Fig. 2: zeigt einen Querschnitt durch den Kabelsteckverbinder der Fig. 1 im montierten Zustand, und
- Fig. 3: zeigt einen Querschnitt durch ein zweites Ausführungsbeispiel eines erfindungsgemäßen Kabelsteckverbinders.

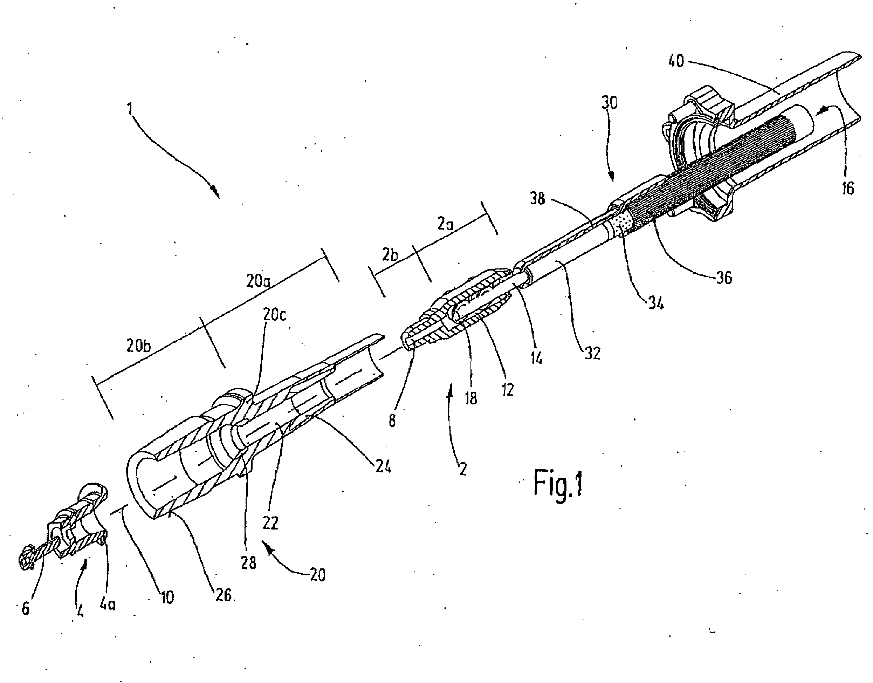

Die Fig. 1 zeigt einen Schnitt durch einen erfindungsgemäßen Kabelsteckverbinder 1 im unmontierten Zustand. Das Verbindungsmittel des Kabelsteckverbinders 1 ist gebildet durch ein Basiselement 2 und ein Kontaktelement 4. Das Basiselement 2 ist mit Ausnahme von Bohrungen für Festlegemittel im Wesentlichen rotationssymmetrisch zu einer Längsachse 10 des Kabelsteckverbinders 1 und weist einen ersten Abschnitt 2a und einen zweiten Abschnitt 2b auf, die unterschiedliche Außendurchmesser aufweisen. In eine Bohrung 12 im ersten Abschnitt 2a ist der Leiter 14 des Kabels 16 einführbar, bei dem es sich beispielsweise um ein Mittelspannungskabel für die Spannungsebene 20 kV handelt mit einem Leiterquerschnitt von 95 mm². Der Leiter 14 kann in dem Basiselement 2 durch zwei in Richtung der Längsachse 10 hintereinander in entsprechende Gewindebohrungen eindrehbare Abreißschrauben 18 mechanisch festgelegt und elektrisch kontaktiert werden.

Der zweite Abschnitt 2b des Basiselements 2 ist im Wesentlichen zapfenartig ausgebildet mit einer zentrischen Gewindebohrung 8, in die eine Verbindungsschraube 6 einschraubbar ist, mittels der das Kontaktelement 4 an dem Basiselement 2 festlegbar ist. Der Übergang zwischen dem ersten Abschnitt 2a zu dem zweiten Abschnitt 2b erfolgt auf der Außenseite in Stufen, wobei zwischen den Stufen die Außenfläche konisch ist. Das Basiselement 2 besteht beispielsweise aus Aluminium und kann eine kontaktfördernde Beschichtung aufweisen, beispielsweise aus Zinn.

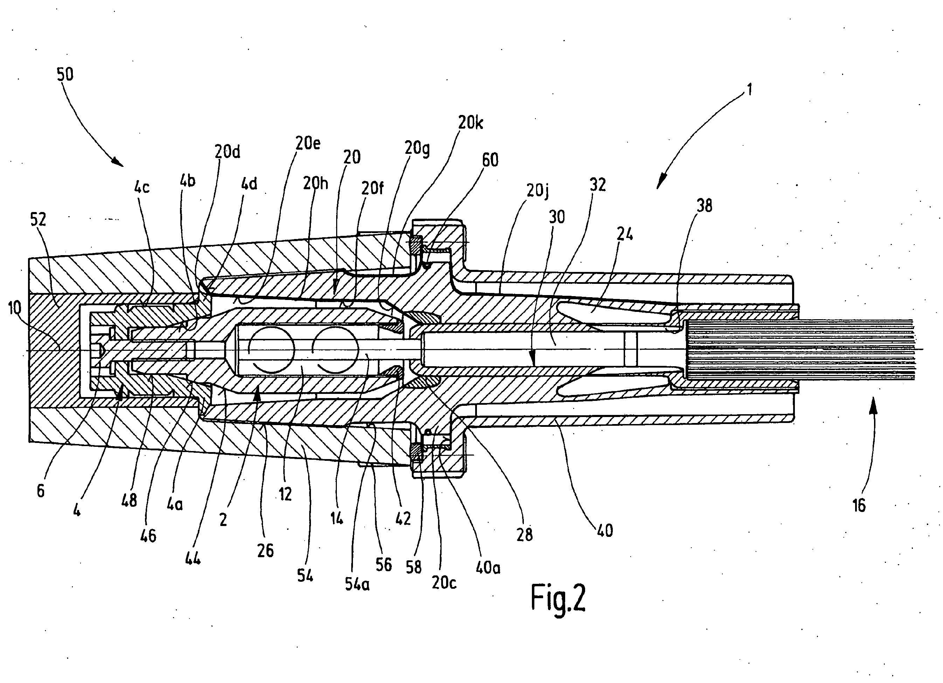

Das im Wesentlichen hutförmige Kontaktelement 4 kann auf seiner Außenfläche selbst die Kontaktstelle aufweisen, oder ein separates Kontaktorgan aufnehmen, beispielsweise eine Kontaktlamelle, die in eine Nut in der Außenfläche des Kontaktelements 4 eingebracht wird. An seinem dem Basiselement 2 zugewandten Ende bildet das Kontaktelement 4 einstückig einen Außenflansch 4a aus, mittels dem im montierten Zustand des Kabelsteckverbinders 1, wie es insbesondere aus der Fig. 2 ersichtlich ist, eine Anlagefläche für das stirnseitige Ende des Isolierelements 20 gebildet ist und dadurch eine im Bereich des stirnseitigen Endes des Isolierelements 20 aufgebrachte leitfähige Schicht elektrisch kontaktiert und dadurch mit dem Potential des Kontaktelements 4 und mithin des Leiters 14 des Kabels 16 verbindet.

Das Isolierelement 20 ist in der Art einer Hülse oder Tülle langgestreckt mit einer durchgehenden Öffnung und rotationssymmetrisch zur Längsachse 10 aus einem weichelastisch verformbaren Kunststoff hergestellt. Als Werkstoff kommt insbesondere ein Siliconkautschuk mit einer vergleichsweise geringen Härte Shore A von weniger als 70 zum Einsatz, vorzugsweise weniger als 50 und insbesondere 25 und 40. lm Ausführungsbeispiels handelt es sich dabei um einen so genannten LSR (liquid silicon rubber) Siliconkautschuk. Ebenfalls möglich ist die Verwendung eines bei Raumtemperatur vernetzten Silikonkautschuks (RTV), eines EPDM-Kautschuks oder vergleichbarer Werkstoffe. Grundsätzlich sind alle Werkstoffe einsetzbar, die ausreichend weichelastisch verformbar und elektrisch isolierend sind, damit bei vorgegebener elektrischer Spannung die Teilentladungsfreiheit gewährleistet ist.

In einem ersten Abschnitt 20a nimmt das Isolierelement 20 das anzuschließende Kabel 16 in sich auf und die das Isolierelement 20 in Richtung der Längsachse 10 durchdringende Öffnung 22 weist den geringsten Innendurchmesser auf, der zum freien Ende des ersten Abschnitts 20a hin stufenartig vergrößert ist und insbesondere an die Außenkontur des Kabels 16 oder eines auf das Kabel 16 aufschiebbaren Adapterelements 30 angepasst ist. Im Bereich des Übergangs der stufenartigen Aufweitung ist eine elektrisch leitfähige erste Feldsteuerelektrode 24 in das Isolierelement 20 integriert.

Am Übergang vom ersten Abschnitt 20a zum zweiten Abschnitt 20b weitet sich die durchgehende Öffnung 22 auf zwecks Aufnahme des Basiselements 2. In diesem zweiten Abschnitt 20b bildet das Isolierelement 20 auf seiner Außenfläche die konische Fläche 26 aus, mittels der eine elektrisch dichte Anlage des Isolierelements 20 und mithin des Kabelsteckverbinders 1 an einer zugeordneten Fläche eines Gegenstücks 50 (Fig. 2) der Steckverbindungseinrichtung gewährleistet ist. Im Übergangsbereich zwischen dem ersten Abschnitt 20a und dem zweiten Abschnitt 20b ist in der durchgehenden Öffnung 22 eine zweite Feldsteuerelektrode 28 in das Isolierelement 20 integriert.

Das Kabel 16 weist eine den zentrischen Leiter 14 isolierende Primärisolation 32 auf, beispielsweise aus Polymer-Kunststoff, auf die eine Leitschicht 34 aufgebracht ist, beispielsweise eine leitfähige Schicht aus Polymerkunststoff, die von einem Kabelschirm 36, beispielsweise aus Metalldrähten, abgedeckt ist und von diesem elektrisch kontaktierbar ist. Je nach Anwendungsfall kann das Kabel auch noch eine den Kabelschirm 36 überdeckende Armierung und eine Sekundärisolation aufweisen, die in der Fig. 1 aus Gründen der Übersichtlichkeit nicht dargestellt ist.

Im dargestellten Ausführungsbeispiel ist ein Adapterelement 30 hülsenartig über das Kabel 16 geschoben und insbesondere im Bereich der Primärisolation 32 in elektrisch dichter Anlage. Hierzu ist das Adapterelement 30 ebenfalls aus einem weichelastisch verformbaren Isolierstoff hergestellt, vorzugsweise auch aus Silikonkautschuk. Der Innendurchmesser des Adapterelements 30 und des Isolierelements 20 ist beispielsweise um jeweils etwa 10 mm dehnbar, so dass der Außendurchmesser der Primärisolation 32 des verwendeten Kabels 16 um mehr als 10 mm variieren kann und dennoch eine elektrisch dichte Anlage des Adapterelements 30 an der Primärisolation 32 und des Isolierelements 20 an dem Adapterelement 30 gewährleistet ist. Ist der Außendurchmesser der Primärisolation 32 ausreichend groß, kann auf die Verwendung des Adapterelements 30 verzichtet werden. Zur Gewährleistung der elektrisch dichten Anlage ist ein Untermaß des Innendurchmessers des Isolierelements 20 bzw. des Adapterelements 30 gegenüber der Primärisolation 32 von etwa 1 mm oder mehr ausreichend.

In das Adapterelement 30 ist eine dritte Feldsteuerelektrode 38 integriert, und zwar in einem Bereich, in dem das Adapterelement 30 in Anlage an der Leitschicht 34 des Kabels 16 ist. Die Feldsteuerelektroden 24, 28, 38 sind ebenfalls aus einem elastisch verformbaren Werkstoff gebildet und können als leitfähiges gummielastisches Einlegeteil in den Werkstoff des Isolierelements 20 bzw. des Adapterelements 30 eingeformt sein oder durch lokale Veränderung der elektrischen Leitfähigkeit des Werkstoffes des Isolierelements 20 bzw. des Adapterelements 30 gebildet sein.

Für die Montage des Kabelsteckverbinders 1 wird das Kabel 16 erforderlichenfalls zunächst abgelängt und anschließend der Kabelmantel entfernt. Der Kabelschirm 36 wird zurückgebogen und die Leitschicht 34 auf der Primärisolation 32 wird soweit entfernt, dass eine ringförmige Kontaktfläche mit der ersten bzw. dritten Feldsteuerelektrode 24, 38 erhalten bleibt. Abschließend wird die Primärisolation 32 so weit entfernt, wie es für das Einführen des Leiters 14 in das Basiselement 2 erforderlich ist. Im dargestellten Ausführungsbeispiel ist der Außendurchmesser des anzuschließenden Kabels 16 im unteren Querschnittsbereich, für welchen der Kabelsteckverbinder 1 spezifiziert ist. Daher wird vor der Festlegung des Basiselements 2 an dem Leiter 14 das Adapterelement 30 über das Ende des Kabels 16 geschoben, bis das blendenartige stirnseitige Ende des Adapterelements 30 in Anlage an der Primärisolation 32 ist.

Anschließend wird das Basiselement 2 an dem Leiter 14 festgelegt durch Einschrauben der Abreißschrauben 18. Daraufhin wird das Basiselement 2 in den ersten Abschnitt 20a des Isolierelements 20 eingeführt, wobei sich der erste Abschnitt 20a aufgrund der elastischen Verformbarkeit des Isolierelements 20 entsprechend aufweitet, bis das Basiselement 2 in den zweiten Abschnitt 20b des Isolierelements 20 einrastet.

Nun wird das Kontaktelement 4 mittels der Verbindungsschraube 6 an dem Basiselement 2 festgelegt, wobei der Außenflansch 4a in Anlage an das stirnseitige Ende des Isolierelements 20 kommt und durch Einleiten einer Axialkraft bereits eine gewisse mechanische Vorspannung in das Isolierelement 20 einleitet, die für eine elektrisch dichte Anlage der konischen Fläche 26 vorteilhaft ist. Der Kabelsteckverbinder 1 kann nun in eine entsprechende Steckbuchse des Gegenstücks eingesteckt werden und mittels eines Flanschelements 40 an dem Gegenstück mechanisch festgelegt werden.

Die Fig. 2 zeigt einen Querschnitt durch den Kabelsteckverbinder 1 der Fig. 1 im montierten Zustand. Das Basiselement 2 ist an dem Leiter 14 des Kabels 16 festgelegt und mit dem Leiter 14 elektrisch verbunden. In dem ersten Abschnitt 2a ist das Basiselement 2 auf seiner Außenfläche im Wesentlichen kreiszylindrisch, wobei es sich zum freien Ende des ersten Abschnitts 2a hin konisch verjüngt und am freien Ende ein Isolierring 42 in die Bohrung 12 eingesteckt ist. Durch diesen Isolierring 42 erfolgt eine Anpassung des Durchmessers der Bohrung 12 an den jeweiligen Außendurchmesser des Leiters 14, mithin eine Zentrierung des Leiters 14 bei kleinen Querschnitten im Verhältnis zur Leiteraufnahmebohrung des ersten Abschnitts 2a, wobei ein Isolierring 42 auch für mehrere Querschnitte des Leiters 14 verwendet werden kann. Darüber hinaus wird durch den Isolierring 42 eine elektrisch isolierende Stirnseite bereitgestellt.

In Richtung auf den zweiten Abschnitt 2b verjüngt sich das Basiselement 2 zunächst über einen ersten konischen Abschnitt 44 bis zu einem weiteren zylindrischen und verhältnismäßig kurzen Abschnitt, um sich anschließend über einen zweiten konischen Abschnitt 46 und eine anschließende Stufe zu einem zylindrischen Zapfen 48 auszubilden. Über den zweiten konischen Abschnitt 44 erfolgt eine elektrische Verbindung zu dem Kontaktelement 4, das mittels der Verbindungsschraube 6 an dem Basiselement 2 festgelegt ist.

Das Kontaktelement 4 ist im Wesentlichen hutförmig ausgebildet, mit einer Art Sacklochbohrung, die im unteren Abschnitt entsprechend dem zylindrischen Zapfen 48 des Basiselements 2 zylindrisch ausgebildet ist, und sich zum freien Ende hin über einen konischen Abschnitt 4b aufweitet, der hinsichtlich des Konuswinkels an den zweiten konischen Abschnitt 46 des Basiselements 2 angepasst ist, und auch einer Selbstzentrierung des zylindrischen Zapfens 48 beim Aufsetzen des Kontaktelements 4 auf das Basiselement 2 dient. Am freien Ende bildet das Kontaktelement 4 den Außenflansch 4a aus, mit dem das Verbindungsmittel des Kabelsteckverbinders 1 bestehend aus Basiselement 2 und Kontaktelement 4 in Anlage an ein Kontaktelement 52 eines Gegenstücks 50 der Steckverbindungseinrichtung bringbar ist.

Die eigentliche elektrische Kontaktstelle zwischen dem Verbindungsmittel, insbesondere dem Kontaktelement 4, des Kabelsteckverbinders 1 und dem Kontaktelement 52 des Gegenstücks 50 erfolgt über ein Kontaktorgan, das auf der zylindrischen Mantelfläche 4c des Kontaktelements 4 angeordnet ist und vorzugsweise eine Vielzahl von insbesondere parallel zur Längsachse 10 ausgerichteten Linienkontakten zu dem Kontaktelement 52 bereitstellt. An seinem stirnseitigen freien Ende bildet das Kontaktelement 4 einen sechseckigen Überstand aus, der im Wesentlichen der Höhe des Schraubenkopfes der Verbindungsschraube 6 entspricht. Dieser Überstand dient vorzugsweise als Angriffsfläche für ein Werkzeug, mit dessen Hilfe ein Verdrehen des Kontaktelements 4 beim Eindrehen oder Ausdrehen der Verbindungsschraube 6 verhindert werden kann.

Die Stirnfläche des Außenflansches 4a ist radial innenseitig durch einen Kreisring gebildet, der mit der Längsachse 10 einen im Wesentlichen rechten Winkel einschließt. Radial außenseitig bildet der Außenflansch 4a einen Außenkonus 4d, der mit der Längsachse 10 einen Winkel von etwa 60° einschließt, und über den das Kontaktelement 4 elektrisch mit dem Isolierelement 20 verbunden ist. Das Isolierelement 20 weist hierzu an seinem freien Ende des zweiten Abschnitts 20b einen ersten Innenkonus 20d auf, der mit der Längsachse 10 ebenfalls einen Winkel von etwa 60° einschließt und der in einen zweiten Innenkonus 20e übergeht, der mit der Längsachse 10 einen Winkel von weniger 20° einschließt und der sich über etwa die halbe Länge des zweiten Abschnitts 20b erstreckt. Der zweite Innenkonus 20e geht über in einen im Wesentlichen zylindrischen Abschnitt 20f, der nahe dem Übergang des zweiten Abschnitts 20b zum ersten Abschnitt 20a in einen dritten Innenkonus 20g übergeht, der mit der Längsachse 10 einen Winkel von etwa 30° einschließt. Am Übergang zum ersten Abschnitt 20a ist in das Isolierelement die zweite Feldsteuerelektrode 28 eingebracht. Über die gesamte axiale Erstreckung von dem stirnseitigen ersten Innenkonus 20d bis zur zweiten Feldsteuerelektrode 28 ist auf der Innenfläche eine elektrisch leitfähige Schicht 20h aufgebracht, welche das Potential des Kontaktelements 4 und mithin des Leiters 14 bis zur zweiten Feldsteuerelektrode 28 führt. Dadurch ist der sich zwischen dem Basiselement 2 und dem Isolierelement 20 im Bereich des zweiten Abschnitts 20b ergebende Hohlraum feldfrei.

Das Isolierelement 20 ist im Bereich des zweiten Abschnitts 20b mit der konischen Fläche 26 in elektrisch dichter Anlage an der zugeordneten und ebenfalls konischen Fläche 54a eines Buchsenelements 54 des Gegenstücks 50. Die elektrisch dichte Anlage ist insbesondere im Bereich des freien Endes des Isolierelements 20 gegeben. Demgegenüber ist der Außendurchmesser des Isolierelements 20 im Bereich des Übergangs vom zweiten Abschnitt 20b zum ersten Abschnitt 20a reduziert, sodass auch die Wandstärke des Isolierelements 20 in diesem Bereich reduziert ist. Daraus ergibt sich eine reduzierte Biegesteifigkeit und das Isolierelement 20 wirkt in diesem Bereich wie eine Axialfeder. Die hierzu erforderliche Axialkraft wird durch das Flanschelement 40 aufgebracht, das auf seiner dem Isolierelement 20 zugewandten Innenseite einen Außenflansch 40a ausbildet, der bei der Montage des Kabelsteckverbinders auf einen von dem Isolierelement 20 im Bereich des Übergangs vom zweiten Abschnitt 20b zum ersten Abschnitt 20a ausgebildeten Außenflansch 20c in Anlage ist und dadurch eine Axialkraft auf das Isolierelement 20 in Richtung auf das Gegenstück 50 ausübt.

Gleichzeitig wird dabei von dem Flanschelement 40 eine erste weitere elektrisch leitfähige Schicht 20j kontaktiert, die das Potential des Flanschelements 40 aufweist, beispielsweise Erdpotential. Die erste weitere elektrisch leitfähige Schicht 20j ist auf die Außenfläche des ersten, das Kabel 16 aufnehmenden Abschnitts 20a des Isolierelements 20 aufgebracht und erstreckt sich vorzugsweise bis zu einer Position, in welcher der Kabelschirm 36 zurückgebogen ist, und die von dem freien Ende des ersten Abschnitts 20a zurückversetzt ist, beispielsweise um einen Betrag von 20 bis 50 mm.

wie im dargestellten Ausführungsbeispiel ein Adapterelement 30 eingesetzt wird, nimmt die dritte Feldsteuerelektrode 38 auf der Innenseite des Adapterelements 30 über die Leitschicht 34 das Potential des Kabelschirms 36 auf, das für Mess- oder Prüfzwecke, beispielsweise zum Prüfen der Mantelisolation des Kabels 16, auf eine Prüfspannung von 5 kV gelegt werden kann. Vorzugsweise außerhalb des Kabelsteckverbinders 1 kann der Erdanschluss des Flanschelements 40 mit dem Kabelschirm 36 verbunden werden, und dadurch der Kabelschirm 36 geerdet werden, oder die Verbindung zu Messzwecken getrennt werden, und der Kabelschirm 36 auf die Prüfspannung gelegt werden.

Auf der Außenseite des Adapterelements 30 bildet die dritte Feldsteuerelektrode 38 insgesamt drei, vier, sechs oder acht, in Umfangsrichtung gleichverteilt angeordnete und sich in Längsrichtung 10 erstreckende Kontaktstege aus, die Linienkontakte bilden und mittels denen das Potential auf die erste Feldsteuerelektrode 24 im Isolierelement 20 übergeben wird. Die erste Feldsteuerelektrode 24 ist im Wesentlichen trichterförmig mit einer verrundeten Kontur ausgebildet, wobei sich der Trichter in Richtung zum ersten Abschnitt 20a hin öffnet. Entsprechendes gilt auch für die dritte Feldsteuerelektrode 38. Auf diese Weise ist es möglich, das elektrische Feld ohne Auftreten von Feldstärkespitzen abzusteuern.

Aufgrund der weichelastischen Verformbarkeit des Isolierelements 20 und des Adapterelements 30 entsteht sowohl am Übergang zwischen der Primärisolation 32 und dem Adapterelement 30 als auch am Übergang zwischen dem Adapterelement 30 und dem Isolierelement 20 eine elektrisch dichte Edelfuge. Über die gesamte Länge des in dem Kabelsteckverbinder 1 montierten Kabels 16 sind somit keine Hohlräume vorhanden, in denen ein elektrisches Feld herrscht.

Im Bereich des Übergangs vom zweiten Abschnitt 20b zum ersten Abschnitt 20a, insbesondere in einem Bereich reduzierter Wandstärke des Isolierelements 20, ist auf der Außenseite eine zweite weitere elektrisch leitfähige Schicht 20k aufgebracht, die mit der leitfähigen Schicht 20h auf der Innenseite kapazitiv gekoppelt ist. Dadurch ist ein Detektieren des Potential des Leiters 14 möglich, wobei das Isolierelement 20 im Bereich des Außenflansches 20c eine ringförmige Nut aufweist, in welche ein Anschlussdraht 60 einlegbar ist, der nach außen geführt werden kann. Dadurch kann insbesondere im zusammengesteckten Zustand der Steckverbindungseinrichtung festgestellt werden, ob sich der Leiter 14 und mithin die Steckverbindungseinrichtung unter Spannung befindet. Die elektrisch leitfähigen Schichten 20h, 20j, 20k sind aus Gründen der Übersichtlichkeit nur in der oberen Bildhälfte der Fig. 2 durch eine verstärkte Linienführung dargestellt. Vorzugsweise sind diese Schichten rotationssymmetrisch auf den gesamten Rotationsflächen aufgebracht. Die Festlegung des Flanschelements 40 an dem Gegenstück 50 erfolgt vorzugsweise durch Verbindungsschrauben 56 unter Zwischenlage eines Dichtrings 58.

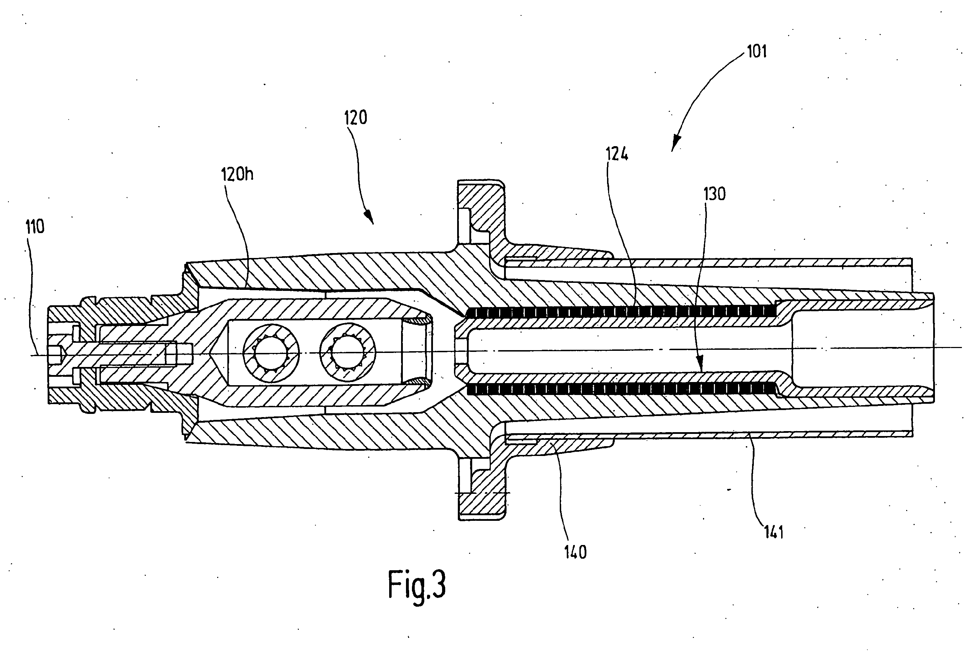

Die Fig. 3 zeigt einen Querschnitt durch ein zweites Ausführungsbeispiel eines erfindungsgemäßen Kabelsteckverbinders 101. Gegenüber der Darstellung der Fig. 2 ist in der Fig. 3 kein Kabel 16 und auch kein Gegenstück 50 eingezeichnet. Die Unterschiede zum ersten Ausführungsbeispiel der Fig. 2 betreffen insbesondere das Flanschelement 40, das nun durch einen Flanschstutzen 140 und einen darin einsteckbaren Rohrstutzen 141 gebildet ist.

Ein weiterer wesentlicher Unterschied besteht darin, dass im ersten Abschnitt des Isolierelements 120 auf der dem verjüngten Abschnitt des Adapterelements 130 zugewandten Innenfläche in Richtung der Längsachse 110 eine Reihe von R/C-Gliedern hintereinander geschaltet sind und dadurch einen refraktiven Steuerschlauch 124 bilden, über den das Potential des Leiters, das über die leitfähige Schicht 120h an das in der Fig. 3 linke Ende des refraktiven Steuerschlauches 124 angekoppelt wird, bis zu dem in der Fig. 3 rechten Ende des refraktiven Steuerschlauches 124, an dessen letztem Glied beispielsweise Erdpotential anliegt, in Stufen abgebaut wird. Die Kette aus R/C-Gliedern wird vorzugsweise durch Widerstandbereiche gebildet, die voneinander beabstandet sind und kapazitiv miteinander gekoppelt sind. Die Widerstandsbereiche können als Einlegeteile in das Isolierelement 120 eingegossen sein, als Oberflächenschicht aufgebracht sein, oder durch lokale Veränderung der Leitfähigkeit des Werkstoffes des Isolierelements 120 gebildet sein. Auch das Adapterelement 130 kann in entsprechender Weise refraktiv ausgebildet sein.

## Patentansprüche

1. Kabelsteckverbinder (1) einer Steckverbindungseinrichtung für die Mittel- und Hochspannungstechnik, wobei der Kabelsteckverbinder (1) ein Verbindungsmittel aufweist, das mit einem Leiter (14) eines Kabels (16) elektrisch verbindbar ist, und über das beim Zusammenstecken des Kabelsteckverbinders (1) mit einem Gegenstück (50) der Steckverbindungseinrichtung eine elektrische Verbindung zwischen dem Leiter (14) und einem Kontaktelement (52) des Gegenstücks (50) zustandekommt, wobei der Kabelsteckverbinder (1) ein Isolierelement (20) aufweist, das mindestens abschnittsweise eine konische Fläche (26) aufweist zur elektrisch dichten Anlage an einer zugeordneten Fläche (54a) des Gegenstücks (50) im zusammengesteckten Zustand, und das einen ersten Abschnitt (20a) aufweist, in dem das Isolierelement (20) das anzuschließende Kabel (16) in sich aufnimmt, und wobei im weiteren Verlauf einer Längsrichtung (10) das Isolierelement (20) einen zweiten Abschnitt (20b) aufweist, der die konische Fläche (26) ausbildet, **dadurch gekennzeichnet, dass** das Isolierelement (20) im zweiten Abschnitt (20b) auf seiner Innenfläche eine elektrisch leitfähige Schicht (20h) aufweist, dass im Bereich der konischen Fläche (26) ein Hohlraum geschaffen ist und dass der Hohlraum durch die elektrisch leitfähige Schicht (20h) des Isolierelements (20) feldfrei bleibt.

2. Kabelsteckverbinder (1) nach Anspruch 1, **dadurch gekennzeichnet, dass** das Isolierelement (20) im ersten Abschnitt (20a) durch das Kabel (16) radial elastisch aufweitbar ist und **dadurch** eine elektrisch dichte Anlage an dem Kabel (16) gewährleistet ist.

3. Kabelsteckverbinder (1) nach Anspruch 1 oder 2, **dadurch gekennzeichnet, dass** das Isolierelement (20) im zweiten Abschnitt (20b) mindestens einen Teil des Verbindungsmittels in sich aufnimmt.

4. Kabelsteckverbinder (1) nach einem der Ansprüche 1 bis 3, **dadurch gekennzeichnet, dass** das Isolierelement (20) auf seiner Außenfläche mindestens eine weitere elektrisch leitfähige Schicht (20j, 20k) aufweist.

5. Kabelsteckverbinder (1) nach Anspruch 4, **dadurch gekennzeichnet, dass** das Isolierelement (20) in dem das Kabel (16) aufnehmenden ersten Abschnitt (20a) auf seiner Außenfläche eine erste weitere elektrisch leitfähige Schicht (20j) aufweist, die mit einem vorgebbaren Potential verbindbar ist, insbesondere mit Erdpotential.

6. Kabelsteckverbinder (1) nach Anspruch 4 oder 5, **dadurch gekennzeichnet, dass** das Isolierelement (20) im zweiten Abschnitt (20b) auf seiner Außenseite eine zweite weitere elektrisch leitfähige Schicht (20k) aufweist für einen kapazitiven Abgriff des elektrischen Potentials des Leiters (14).

7. Kabelsteckverbinder (1) nach einem der Ansprüche 1 bis 6, **dadurch gekennzeichnet, dass** das Isolierelement (20) aus einem weichelastisch verformbaren Kunststoff besteht, insbesondere aus einem Silikonkautschuk mit einer Härte Shore A von weniger als 70, vorzugsweise weniger als 50 und insbesondere zwischen 25 und 40.

8. Kabelsteckverbinder (1) nach einem der Ansprüche 1 bis 7, **dadurch gekennzeichnet, dass** das Isolierelement (20) ein rotationssymmetrischer Körper ist und eine in Längsrichtung (10) vorzugsweise durchgehende Öffnung (22) aufweist.

9. Kabelsteckverbinder (1) nach einem der Ansprüche 1 bis 8, **dadurch gekennzeichnet, dass** das Isolierelement (20) einen Axialfederabschnitt aufweist, der vorzugsweise in Längsrichtung (10) im zweiten Abschnitt (20b) zwischen der konischen Fläche (26) und dem Übergang zum ersten Abschnitt (20a) angeordnet ist oder zwischen dem zweiten Abschnitt (20b) und dem ersten Abschnitt (20a) angeordnet ist, und dass in dem Axialfederabschnitt das Isolierelement (20) in Bezug auf eine Krafteinwirkung in Axialrichtung kraftspeichernd federelastisch verformbar ist.

10. Kabelsteckverbinder (1) nach Anspruch 9, **dadurch gekennzeichnet, dass** im Axialfederabschnitt die Steifigkeit des Isolierelements (20) in Bezug auf in Längsrichtung (10) wirkende Axialkräfte gegenüber dem ersten Abschnitt (20a) und/oder dem zweiten Abschnitt (20b) herabgesetzt ist.

11. Kabelsteckverbinder (1) nach Anspruch 9 oder 10, **dadurch gekennzeichnet, dass** die Wandstärke des Isolierelements (20) im Axialfederabschnitt geringer ist als die Wandstärke im angrenzenden Bereich des ersten und/oder zweiten Abschnitts (20a, 20b) ist, und/oder dass der Außendurchmesser im Axialfederabschnitt gegenüber dem maximalen Außendurchmesser der konischen Fläche (26) reduziert ist.

12. Kabelsteckverbinder (1) nach einem der Ansprüche 1 bis 11, **dadurch gekennzeichnet, dass** ein hülsenartiges Adapterelement (30) über das Kabel (16) schiebbar ist und in elektrisch dichte Anlage an das Kabel (16) einerseits und das Isolierelement (20) andererseits bringbar ist.

13. Kabelsteckverbinder (1) nach Anspruch 12, **dadurch gekennzeichnet, dass** das Adapterelement (30) aus einem weichelastisch verformbaren Werkstoff besteht, vorzugsweise aus einem dem Isolierelement (20) ähnlichen oder identischen Werkstoff.

14. Kabelsteckverbinder (1) nach einem der Ansprüche 1 bis 13, **dadurch gekennzeichnet, dass** über den das Kabel (16) aufnehmenden ersten Abschnitt (20a) des Isolierelements (20) ein Flanschelement (40) des Kabelsteckverbinders (1) überstülpbar ist, mittels dem der Kabelsteckverbinder (1) mit dem Gegenstück (50) der Steckverbindungseinrichtung mechanisch verbindbar ist.

15. Kabelsteckverbinder (1) nach einem der Ansprüche 1 bis 14, **dadurch gekennzeichnet, dass** das Verbindungsmittel eine Kontaktstelle aufweist, über die beim Zusammenstecken mit dem Gegenstück (50) die elektrische Verbindung zustandekommt, und dass die Festlegung des Leiters (14) an dem Verbindungsmittel von der Kontaktstelle des Verbindungsmittels in Längsrichtung (10) beabstandet ist.

16. Kabelsteckverbinder (1) nach Anspruch 15, **dadurch gekennzeichnet, dass** das Verbindungsmittel ein elektrisch leitfähiges Basiselement (2) aufweist mit einem ersten Abschnitt (2a), in dessen Bereich die Festlegung des Leiters (14) erfolgt, und mit einem in Längsrichtung (10) beabstandeten zweiten Abschnitt (2b), in dessen Bereich die Kontaktstelle des Verbindungsmittels angeordnet ist.

17. Kabelsteckverbinder (1) nach Anspruch 16, **dadurch gekennzeichnet, dass** die Außenabmessungen des ersten Abschnitts (2a) im Bereich der Festlegung des Leiters (14) und des zweiten Abschnitts (2b) im Bereich der Kontaktstelle unterschiedlich sind.

18. Kabelsteckverbinder (1) nach Anspruch 16 oder 17, **dadurch gekennzeichnet, dass** das Basiselement (2) vorzugsweise in Richtung der Längsachse (10) eine Bohrung (12) aufweist, in welche der Leiter (14) des Kabels (16) einführbar ist.

19. Kabelsteckverbinder (1) nach einem der Ansprüche 16 bis 18, **dadurch gekennzeichnet, dass** das Basiselement (2) Gewindebohrungen für die Aufnahme von Verbindungsschrauben (18) aufweist, mittels denen der Leiter (14) des Kabels (16) an dem Basiselement (2) festlegbar ist.

20. Kabelsteckverbinder (1) nach einem der Ansprüche 16 bis 19, **dadurch gekennzeichnet, dass** ein die Kontaktstelle aufweisendes Kontaktelement (4) des Verbindungsmittels an dem Basiselement (2) lösbar festlegbar ist.

## Claims

1. Plug type cable connector (1) of a plug type connection device for middle- and high-voltage technology, the plug type cable connector (1) having a connection means which can be electrically connected to a conductor (14) of a cable (16), and by means of which an electrical connection is produced when the plug type cable connector (1) is joined together with a counter-piece (50) of the plug type connection device between the conductor (14) and a contact element (52) of the counter-piece (50), the plug type cable connector (1) having an isolation element (20) at least portions of which have a conical face (26) for electrically tight abutment against an associated face (54a) of the counter-piece (50) in the joined-together state, and which has a first portion (20a) in which the isolation element (20) receives therein the cable (16) to be connected, and the isolation element (20) having, in the continuation of a longitudinal direction (10), a second portion (20b) which forms the conical face (26), **characterised in that** the isolation element (20) has, in the second portion (20b) on the inner face thereof, an electrically conductive layer (20h), **in that** a hollow space is produced in the region of the conical face (26), and **in that** the hollow space remains field-free owing to the electrically conductive layer (20h) of the isolation element (20).

2. Plug type cable connector (1) according to claim 1, **characterised in that** the isolation element (20) can be radially expanded in a resilient manner in the first portion (20a) by the cable (16) and an electrically tight abutment against the cable (16) is thereby ensured.

3. Plug type cable connector (1) according to claim 1 or 2, **characterised in that** the isolation element (20) receives therein at least a portion of the connection means in the second portion (20b).

4. Plug type cable connector (1) according to any one of claims 1 to 3, **characterised in that** the isolation element (20) has, on the outer face thereof, at least one additional electrically conductive layer (20j, 20k).

5. Plug type cable connector (1) according to claim 4, **characterised in that** the isolation element (20) has, on the outer face thereof, in the first portion (20a) which receives the cable (16), a first additional electrically conductive layer (20j) which can be connected to a potential which can be predetermined, in particular earth potential.

6. Plug type cable connector (1) according to claim 4 or 5, **characterised in that** the isolation element (20) has, in the second portion (20b) on the outer face thereof, a second additional electrically conductive layer (20k) for capacitive tapping of the electrical potential of the conductor (14).

7. Plug type cable connector (1) according to any one of claims 1 to 6, **characterised in that** the isolation element (20) comprises a resiliently deformable plastics material, in particular silicone rubber having a Shore A hardness of less than 70, preferably less than 50, and in particular between 25 and 40.

8. Plug type connector (1) according to any one of claims 1 to 7, **characterised in that** the isolation element (20) is a rotationally symmetrical body and has an opening (22) which is preferably continuous in a longitudinal direction (10).

9. Plug type cable connector (1) according to any one of claims 1 to 8, **characterised in that** the isolation element (20) has an axial resilient portion which is preferably arranged in the longitudinal direction (10) in the second portion (20b) between the conical face (26) and the transition to the first portion (20a) or between the second portion (20b) and the first portion (20a), and **in that**, in the axial resilient portion, the isolation element (20) can be deformed in a resilient and energy storing manner with respect to an application of force in an axial direction.

10. Plug type cable connector (1) according to claim 9, **characterised in that**, in the axial resilient portion, the rigidity of the isolation element (20) is reduced compared with the first portion (20a) and/or the second portion (20b) with respect to axial forces which are acting in the longitudinal direction (10).

11. Plug type cable connector (1) according to claim 9 or 10, **characterised in that** the wall thickness of the isolation element (20) in the axial resilient portion is less than the wall thickness in the adjacent region of the first and/or second portion (20a, 20b), and/or **in that** the outer diameter in the axial resilient portion is reduced compared with the maximum outer diameter of the conical face (26).

12. Plug type cable connector (1) according to any one of claims 1 to 11, **characterised in that** a sleeve-like adapter element (30) can be pushed over the cable (16) and can be brought into electrically tight abutment against the cable (16) at one side and against the isolation element (20) at the other side.

13. Plug type cable connector (1) according to claim 12, **characterised in that** the adapter element (30) comprises a resiliently deformable material, preferably a material which is similar or identical to the isolation element (20).

14. Plug type cable connector (1) according to any one of claims 1 to 13, **characterised in that** a flange element (40) of the plug type cable connector (1) can be fitted over the first portion (20a) of the isolation element (20) that receives the cable (16), by means of which flange element (40) the plug type cable connector (1) can be mechanically connected to the counter-piece (50) of the plug type connection device.

15. Plug type cable connector (1) according to any one of claims 1 to 14, **characterised in that** the connection means has a contact location by means of which the electrical connection is produced when joined together with the counter-piece (50), and **in that** the securing of the conductor (14) to the connection means is spaced-apart from the contact location of the connection means in the longitudinal direction (10).

16. Plug type cable connector (1) according to claim 15, **characterised in that** the connection means has an electrically conductive base element (2) having a first portion (2a) in the region of which the conductor (14) is secured and having a second portion (2b) which is spaced-apart in the longitudinal direction (10) and in the region of which the contact location of the connection means is arranged.

17. Plug type cable connector (1) according to claim 16, **characterised in that** the outer dimensions of the first portion (2a) in the region in which the conductor (14) is secured and those of the second portion (2b) in the region of the contact location are different.

18. Plug type cable connector (1) according to claim 16 or 17, **characterised in that** the base element (2) has, preferably in the direction of the longitudinal axis (10), a hole (12) into which the conductor (14) of the cable (16) can be introduced.

19. Plug type cable connector (1) according to any one of claims 16 to 18, **characterised in that** the base element (2) has threaded holes for receiving connection screws (18) by means of which the conductor (14) of the cable (16) can be secured to the base element (2).

20. Plug type cable connector (1) according to any one of claims 16 to 19, **characterised in that** a contact element (4) of the connection means that has the contact location can be releasably secured to the base element (2).

## Revendications

1. Connecteur enfichable de câble (1) d'un dispositif enfichable de connexion destiné à la technique de moyenne et haute tension,
- le connecteur enfichable de câble (1) comporte un moyen de liaison qui peut être raccordé électriquement à un conducteur (14) d'un câble (16), ce qui établit une liaison électrique entre le conducteur (14) et un élément de contact (52) de la pièce antagoniste (50) quand on assemble le connecteur enfichable de câble (1) à une pièce antagoniste (50) du dispositif enfichable de connexion,
- le connecteur enfichable de câble (1) comporte un élément isolant (20) qui au moins sur certaines portions a une surface conique (26) pour assurer à l'état assemblé un contact électrique étroit avec une surface (54a) associée de la pièce antagoniste (50) et qui a une première portion (20a) où le câble (16) à raccorder est reçu à l'intérieur de l'élément isolant (20) et
- plus avant en sens longitudinal (10) l'élément isolant (20) a une deuxième portion (20b) qui forme la surface conique (26),
**caractérisé en ce que** dans la deuxième portion (20b) l'élément isolant (20) comporte une couche (20h) électroconductrice sur sa face intérieure, **en ce qu'**un espace creux est pratiqué dans la zone de la surface conique (26) et **en ce que** l'espace creux garde un champ nul grâce à la couche électroconductrice (20h) de l'élément isolant (20).

2. Connecteur enfichable de câble (1) selon la revendication 1, **caractérisé en ce que** dans la première portion (20a) l'élément isolant (20) peut être élargi radialement de manière élastique par le câble (16), ce qui assure un contact électrique étroit avec le câble (16).

3. Connecteur enfichable de câble (1) selon la revendication 1 ou 2, **caractérisé en ce qu'**au moins une partie du moyen de liaison est reçue à l'intérieur de l'élément isolant (20) dans la deuxième portion (20b).

4. Connecteur enfichable de câble (1) selon l'une des revendications 1 à 3, **caractérisé en ce que** sur sa surface extérieure l'élément isolant (20) comporte au moins une autre couche électroconductrice (20j, 20k).

5. Connecteur enfichable de câble (1) selon la revendication 4, **caractérisé en ce que** dans la première portion (20a) qui reçoit le câble (16) l'élément isolant (20) sur la surface extérieure comporte une autre première couche électroconductrice (20) qui peut être raccordée à un potentiel prédéfinissable, en particulier au potentiel terrestre.

6. Connecteur enfichable de câble (1) selon la revendication 4 ou 5, **caractérisé en ce que** dans la deuxième portion (20b) l'élément isolant (20) sur sa surface extérieure comporte une deuxième autre couche électroconductrice (20k) pour prélever de manière capacitive le potentiel électrique du conducteur (14).

7. Connecteur enfichable de câble (1) selon l'une des revendications 1 à 6, **caractérisé en ce que** l'élément isolant (20) est en matière plastique déformable et élastique souple, en particulier en caoutchouc de silicone dont la dureté Shore est inférieure à 70, de préférence inférieure à 50 et plus particulièrement comprise entre 25 et 40.

8. Connecteur enfichable de câble (1) selon l'une des revendications 1 à 7, **caractérisé en ce que** l'élément isolant (20) est un corps à symétrie de rotation et comporte une ouverture (22) de préférence traversante en sens longitudinal (10).

9. Connecteur enfichable de câble (1) selon l'une des revendications 1 à 8, **caractérisé en ce que** l'élément isolant (20) comporte une portion axiale élastique, de préférence placée en sens longitudinal (10) dans la deuxième portion (20b) entre la surface conique (26) et la transition vers la première portion (20b) ou entre la deuxième portion (20b) et la première portion (20a), et que dans la portion axiale élastique l'élément isolant (20) peut se déformer élastiquement de manière à conserver la force en cas d'application d'une force en sens axial.

10. Connecteur enfichable de câble (1) selon la revendication 9, **caractérisé en ce que** dans la portion axiale élastique l'élément isolant (20) est moins rigide que la première portion (20a) et/ou que la deuxième portion (20b) en cas de forces axiales qui agissent en sens longitudinal (10).

11. Connecteur enfichable de câble (1) selon la revendication 9 ou 10, **caractérisé en ce que** dans la portion axiale élastique l'élément isolant (20) a une paroi moins épaisse que l'élément isolant (20) dans la zone voisine de la première et/ou de la deuxième portion (20a, 20b) et/ou que le diamètre extérieur dans la portion axiale élastique est moindre que le diamètre extérieur maximal de la surface conique (26).

12. Connecteur enfichable de câble (1) selon l'une des revendications 1 à 11, **caractérisé en ce qu'**un élément d'adaptation (30) sous forme de manchon peut coulisser sur le câble (16) et peut être mis en contact électrique étroit avec le câble (16) d'une part et avec l'élément isolant (20) d'autre part.

13. Connecteur enfichable de câble (1) selon la revendication 12, **caractérisé en ce que** l'élément d'adaptation (30) est en un matériau déformable et élastique souple, de préférence en un matériau comparable ou identique à l'élément isolant (20).

14. Connecteur enfichable de câble (1) selon l'une des revendications 1 à 13, **caractérisé en ce qu'**un élément de bridage (40) du connecteur enfichable de câble (1) peut être embouti par retournement sur la première portion (20a) - qui reçoit le câble (16) - de l'élément isolant (20) et peut relier le connecteur enfichable de câble (1) à la pièce antagoniste (50) du dispositif enfichable de connexion.

15. Connecteur enfichable de câble (1) selon l'une des revendications 1 à 14, **caractérisé en ce que** le moyen de liaison comporte un point de contact qui permet d'établir la liaison électrique lors de l'assemblage à la pièce antagoniste (50) et que la fixation du conducteur (14) au moyen de liaison est à distance du point de contact du moyen de liaison en sens longitudinal (10).

16. Connecteur enfichable de câble (1) selon la revendication 15, **caractérisé en ce que** le moyen de liaison comporte un élément de base (2) électroconducteur muni d'une première portion (2a) dans la zone de laquelle est fixé le câble (14) et d'une deuxième portion (2b) située à distance en sens longitudinal (10) et dans la zone de laquelle se trouve le point de contact du moyen de liaison.

17. Connecteur enfichable de câble (1) selon la revendication 16, **caractérisé en ce que** la première portion (2a) dans la zone où est fixé le conducteur (14) et la deuxième portion (2b) dans la zone du point de contact ont des dimensions extérieures différentes.

18. Connecteur enfichable de câble (1) selon la revendication 16 ou 17, **caractérisé en ce que** l'élément de base (2) comporte de préférence dans la direction de l'axe longitudinal (10) un perçage (12) dans lequel peut être introduit le conducteur (14) du câble (16).

19. Connecteur enfichable de câble (1) selon l'une des revendications 16 à 18, **caractérisé en ce que** l'élément de base (2) comporte des taraudages pour recevoir des vis d'assemblage (18) qui permettent de fixer le conducteur (14) du câble (16) à l'élément de base (2).

20. Connecteur enfichable de câble (1) selon l'une des revendications 16 à 19, **caractérisé en ce qu'**un élément de contact (4) - muni d'un point de contact - du moyen de liaison peut être fixé de façon détachable à l'élément de base (2).
